# EUROPEAN PATENT SPECIFICATION

(11) **EP 3 933 019 B1**
(45) Date of publication and mention of the grant of the patent: **29.04.2026**
(21) Application number: 21182823.1
(22) Date of filing: 30.06.2021
(51) Int. Cl.: C11D 17/04, B65D 65/46

(54) **PROCESS FOR MANUFACTURING A WATER-SOLUBLE UNIT DOSE ARTICLE**
VERFAHREN ZUR HERSTELLUNG EINES WASSERLÖSLICHEN EINHEITSDOSISARTIKELS
PROCÉDÉ DE FABRICATION D'UN ARTICLE DE DOSE UNITAIRE SOLUBLE DANS L'EAU

(30) Priority: 30.06.2020 EP 20183027
(43) Date of publication of application: 05.01.2022
(73) Proprietor: The Procter & Gamble Company, Cincinnati, OH 45202 (US)
(72) Inventor: KIRAN, Varlik, 1853 Strombeek-Bever (BE); COURCHAY, Florence Catherine, 1853 Strombeek-Bever (BE)
(74) Representative: P&G Patent Belgium UK

(56) References cited:
- WO-A1-2017/218448
- WO-A1-2019/238730

## Description

### FIELD OF THE INVENTION

A process for manufacturing a water-soluble unit dose article, wherein the water-soluble unit dose article comprises a detergent composition, a first water-soluble film and a second water-soluble film.

### BACKGROUND OF THE INVENTION

Water-soluble detergent unit dose articles are preferred by consumers as they are a convenient, efficient and clean way of dosing detergent during the wash process. The water-soluble unit dose form means that the consumer does not need to measure the dose themselves nor do they suffer from accidental spillage of the detergent which some consumers find messy and inconvenient.

However, such water-soluble unit dose articles can suffer from premature rupture during storage, especially rupture due to failure of the seal between the two films making up with the unit dose article. Often such unit dose articles are stored in flexible resealable bags or rigid closeable tubs. In either case premature rupture of a water-soluble unit dose article can negatively affect the dosing experience as the internal contents of the ruptured unit dose article contaminate the other non-ruptured unit dose articles. Hence, the consumer may find the dosing experience 'messy' and inconvenient.

Furthermore, seal failure can occur during the unit dose article manufacturing process. Such failure results in wasted resource and time as the ruptured pouches need to be scrapped.

Therefore, there is an on-going need in the art to improve the seal strength of the seal area of water-soluble unit dose articles to reduce premature rupture of the unit dose articles ahead of use by the consumer and also during manufacture.

WO2017218448 disclosed the use of a first water-soluble film and a second water-soluble film wherein the difference in water capacity between the films was between 0.01% and 1% in order to improve seal strength. However, it was surprisingly found that the process according to the present invention provided improved sealing over WO2017218448. Without wishing to be bound by theory, it was surprisingly found that application of the sealing solvent to the water-soluble film having the lowest water capacity provided an improved seal versus WO2017218448 in which the sealing solvent was applied to the water-soluble film having the highest water capacity.

WO2019238730 discloses a process for producing a water-soluble container comprising the steps of a) forming an open pouch from a first water-soluble film;b) filling at least part of the pouch with a composition;c) covering the filled pouch with a second water-soluble film d) sealing the first water-soluble film of the filled pouch with the second water-soluble film,wherein at least one of the first or second water-soluble films is a multi-layered film comprising at least two film layers L1 and/or L2 in any order or a washing- and cleaning-active polymer film, and wherein before sealing step d) the second water-soluble film covering the filled pouch is contacted with water, a water-soluble container obtainable by said process, the use of said process for the production of a detergent pod or dishwashing pod, and the use of said water-soluble container for dosing detergent into a laundry machine or a dishwashing machine.

WO2017218448 is related to the use of a first water-soluble film and a second water-soluble film in the manufacture of a water-soluble unit dose article comprising a detergent composition wherein the first water- soluble film and the second water-soluble film are sealed together along a seal area, in order to improve the seal strength in the seal area.

### SUMMARY OF THE INVENTION

A process for manufacturing a water-soluble unit dose article having improved seal strength, wherein the water-soluble unit dose article comprises a detergent composition, comprises the steps of
a. thermoforming a first water-soluble film into a mould to create an open cavity;
b. filling the open cavity with the detergent composition;
c. closing the open cavity by positioning a second water-soluble film in contact with the first water-soluble film such that the second water-soluble film closes the open cavity;
d. sealing the first film and second film together via solvent sealing, wherein the sealing solvent comprises water;

wherein the first water-soluble film has a first water capacity, and wherein the second water-soluble film has a second water capacity, and wherein the first water capacity is different to the second water capacity; and
wherein the difference between the water capacity of the first water soluble film and the second water-soluble film is between 0.01% and 5%; and
wherein the sealing solvent is applied prior to step c and the sealing solvent is applied to the film having the lowest water capacity;
wherein the first water soluble film comprises a first water soluble resin and the second water soluble film comprises a second water soluble resin, wherein the first water soluble resin comprises at least one polyvinyl alcohol homopolymer or at least one polyvinylalcohol copolymer or a blend thereof and the second water soluble resin comprises at least one polyvinyl alcohol homopolymer or at least one polyvinylalcohol copolymer or a blend thereof.

### BRIEF DESCRIPTION OF THE DRAWINGS

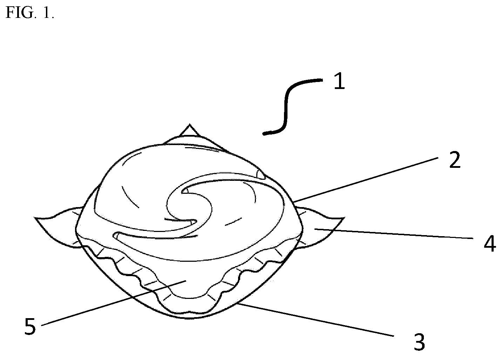

FIG.1 is a water-soluble unit dose article according to the present invention.

### DETAILED DESCRIPTION OF THE INVENTION

### Process

The present invention is a process for manufacturing a water-soluble unit dose article having improved seal strength. Without wishing to be bound by theory, a water-soluble unit dose article comprises water-soluble film shaped such that the unit-dose article comprises at least one internal compartment surrounded by the water-soluble film. The unit dose article comprises a first water-soluble film and a second water-soluble film sealed to one another such to define the internal compartment. The compartment should be understood as meaning a closed internal space within the unit dose article, which holds the detergent composition.

The seal strength is understood as the strength of the seal between the first water-soluble film and the second water-soluble film. If the seal strength is too weak, then the water-soluble unit dose article may prematurely rupture due to failure of the seal. The water-soluble unit dose article is described in more detail below. The first water-soluble film and the second water-soluble film are described in more detail below.

The process of the present invention comprises the step of;
a. thermoforming a first water-soluble film into a mould to create an open cavity.
The first water-soluble film is described in more detail below. Those skilled in the art will be aware of suitable thermoforming processes. Without wishing to be bound by theory, the water-soluble film is drawn into the mould. The water-soluble film may be drawn into the mould using vacuum, heat or a mixture thereof. Once the water-soluble unit dose article is drawn into the mould, this creates an open cavity. Without wishing to be bound by theory, the process of drawing the water-soluble film into the mould, parts of the water-soluble film are stretched to fit the shape of the mould.

Those skilled in the art will be aware of suitable mould shapes and sizes. The mould may have any suitable shape. The mould may be square, rectangular, circular, oval, superelliptical or a combination thereof. The mould may be shaped such as to create a single cavity. Alternatively, the mould may be shaped to create at least two, or even at least three cavities.

The process of the present invention comprises the step of;
b. filling the open cavity with the detergent composition.

The detergent composition is described in more detail below. Those skilled in the art will be aware of suitable detergent compositions.

Those skilled in the art will be aware of suitable means and apparatus to fill the open cavity with the detergent composition. Suitable means can include filling nozzles. The filling nozzle may be a static filling nozzle or may be a reciprocating filling nozzle. Each cavity may be filled by a single nozzle or by more than one nozzle. Each cavity may be filled using two nozzles. Each of the two nozzles may fill the single cavity sequentially or simultaneously. Wherein a mould is shaped to create at least two cavities, each cavity may be filled sequentially or simultaneously. Each cavity may independently be filled using a single nozzle or multiple nozzles, either simultaneously or sequentially.

The filling step may be manually operated or automated.

The process of the present invention comprises the step of;
c. closing the open cavity by positioning a second water-soluble film in contact with the first water-soluble film such that the second water-soluble film closes the open cavity.

The second water-soluble film is described in more detail below. Without wishing to be bound by theory, the second water-soluble film is placed over the first water-soluble film so that upon sealing the water-soluble films together in step d, the cavity is completely closed so as to create an internal compartment. It is intended that the detergent composition is housed within the internal compartment created and so is not released until intended use.

Those skilled in the art will be aware of appropriate apparatus and processes to position the second water-soluble film in contact with the first water-soluble film. Those skilled in the art will be aware of appropriate sizes and dimensions for the second water-soluble film in order for it to close the open cavity.

The second water-soluble film may be thermoformed during manufacture of the unit dose article. Alternatively, the second water-soluble film may not be thermoformed during manufacture of the unit dose article. Preferably, the first water-soluble film is thermoformed during manufacture of the unit dose article and the second water-soluble film is not thermoformed during manufacture of the unit dose article.

The process of the present invention comprises the further step of;
d. sealing the first film and second film together via solvent sealing, wherein the sealing solvent comprises water.

Without wishing to be bound by theory, solvent sealing involves applying a sealing solvent to at least one of the water-soluble films at some point prior to step c, such that when the first water-soluble film and the second water-soluble film are brought into contact with one another, the sealing solvent acts to seal the two films together. Those skilled in the art will be aware of an appropriate point in the process of the present invention in which to apply the sealing solvent.

The sealing solvent is applied prior to step c. Without wishing to be bound by theory, the sealing solvent can be applied at any point prior to the first water-soluble film and the second water-soluble film being brought into contact with one another. Without wishing to be bound by theory, each water-soluble film has a first side and a second side. The sealing solvent needs only to be added to one side of the water-soluble film.

The first water-soluble film has a first water capacity, and the second water-soluble film has a second water capacity, and the first water capacity is different to the second water capacity. The water capacity is described in more detail below. The difference between the water capacity of the first water soluble film and the second water-soluble film is between 0.01% and 5%. The sealing solvent is applied to the film having the lowest water capacity.

The sealing solvent comprises water. Preferably, the sealing solvent comprises 95% or greater, preferably 97% or greater, by weight of the sealing solvent, of water, preferably 100% by weight of the sealing solvent of water. By 100% by weight, it should be understood here that the sealing solvent may include some minor levels of impurity. Such impurities will account for 3% or less by weight of the sealing solvent. Such impurities might include some water soluble film actives that got transferred from water soluble films during the film wetting process when using a contact wetting process such as when using a felt role, the felt role transferring some dissolved water soluble film parts to the bulk tank comprising the sealing water. Also, it is known to include some polyol materials to manage the viscosity of the sealing solvent and enable better spreading of the sealing solvent.

Preferably, the water capacity of the first water-soluble film is greater than the water capacity of the second water-soluble film. Without wishing to be bound by theory, it is believed that the sealing water will remain more on the surface of the water soluble film having the lower water capacity and as such is available for longer to enable sealing upon contact with the film of higher water capacity. The film of higher water capacity allows for faster penetration of the sealing water in the water soluble film, enabling a more equal water concentration on either side of the seal, which results in stronger bonds. Preferably, the second water-soluble film has the lowest water capacity and so the sealing solvent would be applied to the second water-soluble film. Preferably, the first water-soluble film has a water capacity from 1.5% to 12%, preferably from 2.5% to 10%, more preferably from 3.5% to 8%. Preferably, the second water-soluble film has a water capacity from 1% to 10%, preferably from 2% to 8%, more preferably from 3% to 6%. Preferably, the difference in water capacity is from 0.03% to 3.5 %, most preferably from 0.05% to 2%.

Preferably, the second water-soluble film has a lower water capacity than the first water-soluble film and the second water-soluble film comprises a first side and a second side. Preferably, the first side of the second water-soluble film comprises a third water-soluble film sealed to said first side, wherein preferably closed compartments comprising detergent composition are present between said second water-soluble film and said third water-soluble film, and wherein in step c, the second side of the second water-soluble film is brought into contact with the first water-soluble film. Preferably, the third water-soluble film has a third water capacity and the second water capacity (water capacity of the second water-soluble film) is lower than the third water capacity. Preferably, the second water-soluble film and the third water soluble are sealed via solvent sealing, wherein the solvent comprises water, and wherein the solvent is applied to the second water-soluble film. Those skilled in the art will be aware of which side of the second water-soluble film to apply the sealing solvent to effect effective sealing of the second water-soluble film and third water-soluble together.

FIG.1 discloses a water-soluble unit dose article (1) according to the present invention. The water-soluble unit dose article (1) comprises a first water-soluble film (2) and a second water-soluble film (3) which are sealed together at a seal region (4). The laundry detergent composition (5) is comprised within the water-soluble soluble unit dose article (1).

The water-soluble films are described in more detail below.

### Water-soluble unit dose article

The water-soluble unit dose article is constructed such that the detergent composition does not leak out of the compartment during storage. However, upon addition of the water-soluble unit dose article to water, the water-soluble film dissolves and releases the contents of the internal compartment into the wash liquor.

The seal strength is understood as the strength of the seal between the first water-soluble film and the second water-soluble film. If the seal strength is too weak, then the water-soluble unit dose article may prematurely rupture due to failure of the seal.

The area in which the two films meet and are sealed together is referred to as the seal area. Often, the seal area comprises a 'skirt' or 'flange' which comprises area of the first water-soluble film sealed to an area of the second water-soluble film and which generally protrudes out from the main body of the unit dose article.

The unit dose article may comprise more than one compartment, even at least two compartments, or even at least three compartments. The compartments may be arranged in superposed orientation, i.e. one positioned on top of the other. In such an orientation the unit dose article will comprise three films, top, middle and bottom. Preferably, the middle film will correspond to the second water-soluble film according to the present invention and top and bottom films will correspond to the first water-soluble film according to the present invention. Alternatively, the compartments may be positioned in a side-by-side orientation, i.e. one orientated next to the other. The compartments may even be orientated in a 'tyre and rim' arrangement, i.e. a first compartment is positioned next to a second compartment, but the first compartment at least partially surrounds the second compartment, but does not completely enclose the second compartment. Alternatively, one compartment may be completely enclosed within another compartment. In such a multi compartment orientation, the first water-soluble film according to the present invention may be shaped to comprise an open compartment into which the detergent composition is added. The second water-soluble film according to the present invention is then laid over the first film in such an orientation as to close the opening of the compartment.

Wherein the unit dose article comprises at least two compartments, one of the compartments may be smaller than the other compartment. Wherein the unit dose article comprises at least three compartments, two of the compartments may be smaller than the third compartment, and preferably the smaller compartments are superposed on the larger compartment. The superposed compartments preferably are orientated side-by-side.

In a multi-compartment orientation, the detergent composition according to the present invention may be comprised in at least one of the compartments. It may for example be comprised in just one compartment, or may be comprised in two compartments, or even in three compartments.

Each compartment may comprise the same or different compositions. The different compositions could all be in the same form, or they may be in different forms.

The water-soluble unit dose article may comprise at least two internal compartments, wherein the liquid laundry detergent composition is comprised in at least one of the compartments, preferably wherein the unit dose article comprises at least three compartments, wherein the detergent composition is comprised in at least one of the compartments.

### First and second water-soluble films

The water-soluble unit dose article comprises a first water-soluble film and a second water-soluble film. The first water-soluble film has a first water capacity, and the second water-soluble film has a second water capacity, and the first water capacity is different to the second water capacity.

By 'water capacity' we herein mean the capacity of the film to absorb water over a fixed period of time at a particular relative humidity and temperature, measured as a mass increase of the film being tested. The method for measuring water capacity is described in more detail below.

Preferably, the water capacity of the first water-soluble film is greater than the water capacity of the second water-soluble film. Preferably, the first water-soluble film has a water capacity from 1.5% to 12%, preferably from 2.5% to 10%, more preferably from 3.5% to 8%. Preferably, the second water-soluble film has a water capacity from 1% to 10%, preferably from 2% to 8%, more preferably from 3% to 6%. Preferably, the difference in percentage water capacity between the first water-soluble film and the second water-soluble film is from 0.03% to 3.5 %, most preferably from 0.05% to 2%. For the avoidance of doubt, this means that if for example the first water-soluble film had a water capacity of 3% and the second water-soluble film has a water capacity of 2%, the difference in water capacity is 1%.

Preferably, the first water-soluble film and the second water-soluble film are chemically different to one another. For the avoidance of doubt, in the context of the present invention 'chemically different' herein means where the 'virgin films', i.e. films received from the supplier/manufacture and prior to unwinding on a unit dose article making unit, having at least one substance present in at least one of the film compositions that differentiates the first from the second film composition and impacts at least the water capacity, per the test method described herein, rendering this at least one physical film property different between the first and second films. Varying chemical compositions of films due to natural making processes i.e. batch to batch variations are as such not considered chemically different films within the scope of this invention.

Non limiting examples of chemically differentiating substances include use of different polymer target resins and or content, different plasticizer composition and or content or different surfactant and or content. Water soluble unit dose articles comprising films solely differing in physical properties but having the same substance content such as films solely differing in film thickness are considered outside the scope of this invention. Unit dose articles made from films being solely differentiated through the presence versus the absence of a coating layer are also considered outside the scope of the invention.

The first water-soluble film, the second water-soluble film or a mixture thereof independently may have a thickness before incorporation into the unit dose article of between 40 microns and 100 microns, preferably between 60 microns and 90 microns, more preferably between 70 microns and 80 microns.

Preferably the difference in thickness before incorporation into the unit dose article between the first water-soluble film and the second water-soluble film is less than 50%, preferably less than 30%, more preferably less than 20%, even more preferably less than 10%, or the thicknesses may be equal.

The first water-soluble film and the second water-soluble film according to the invention are preferably single layer films, more preferably manufactured via solution casting.

Preferably, the first water soluble film comprises a first water soluble resin and the second water soluble film comprises a second water soluble resin. Preferably, the first water soluble resin comprises at least one polyvinyl alcohol homopolymer or at least one polyvinylalcohol copolymer or a blend thereof and the second water soluble resin comprises at least one polyvinyl alcohol homopolymer or at least one polyvinylalcohol copolymer or a blend thereof.

The first water soluble resin may comprise a blend of a polyvinyl alcohol homopolymer and a polyvinyl alcohol copolymer comprising an anionic monomer unit, preferably wherein the blend comprises from 0% to 70% by weight of the first water soluble resin of the polyvinyl alcohol copolymer comprising an anionic monomer unit and from 30% to about 100% by weight of the first water soluble resin of the polyvinyl alcohol homopolymer, more preferably wherein the blend comprises from 10% to 70%, even more preferably from 15% to less than 65%, even more preferably from 20% to 50%, most preferably from 30% to 40% of the polyvinyl alcohol copolymer comprising an anionic monomer unit and from 30% to 90%, or greater than 35% to 85%, or from 50% to 80%, or from 60 wt% to 70 wt% by weight of the first water soluble resin of the polyvinyl alcohol homopolymer, based on the total weight of the first water soluble resin. The polyvinyl alcohol copolymer can be present at a concentration which, together with the concentration of the polyvinyl alcohol homopolymer, sums to 100%.

The first water soluble resin may comprise 100% by weight of the first water soluble resin of a polyvinyl alcohol copolymer comprising an anionic monomer unit.

The second water soluble resin may comprise a blend of a polyvinyl alcohol homopolymer and a polyvinyl alcohol copolymer comprising an anionic monomer unit, preferably wherein the blend comprises from 0% to 70% of the polyvinyl alcohol copolymer comprising an anionic monomer unit and from 30% to 100% of the polyvinyl alcohol homopolymer, based on the total weight of the second water soluble resin in the film, more preferably wherein the blend comprises from 10% to 70%, even more preferably from 15% to 65%, even more preferably from 20% to 50%, most preferably from 30% to 40% of the polyvinyl alcohol copolymer comprising an anionic monomer unit and from 30% to 90%, or from 35% to 85%, or from 50% to 80%, or from 60 wt% to 70 wt% by weight of the second water soluble resin of the polyvinyl alcohol homopolymer, based on the total weight of the second water soluble resin in the film. The polyvinyl alcohol copolymer can be present at a concentration which, together with the concentration of the polyvinyl alcohol homopolymer, sums to 100%.

The second water soluble resin may comprise 100% by weight of the second water soluble resin of a polyvinyl alcohol homopolymer.

Preferably, when both the first and the second water soluble film comprise a blend of a polyvinyl homopolymer and a polyvinyl alcohol copolymer comprising an anionic monomer unit, the second water-soluble film has a higher crystallinity than the first water soluble film. Without wishing to be bound by theory a higher crystallinity is believed to lead to a lower water capacity. This higher crystallinity could be achieved through increasing the relative homopolymer content by weight of the total weight of water soluble resin, increasing the viscosity (hence molecular weight) of the homopolymer, increasing the degree of hydrolysis of the homopolymer, or a mixture thereof. Alternatively, decreasing the anionic charge density of the copolymer, increasing its viscosity (hence molecular weight) or increasing it degree of hydrolysis can increase its crystallinity. An increased crystallinity could also be achieved through a mixture of above means or could be an increased crystallinity net result of a number of positive and negative crystallinity impacts.

Preferably, the polymer of the first water soluble resin is different from the polymer of the second water soluble resin. Preferably the polymeric blend of the second water soluble resin is different from the polymeric blend of the first water soluble resin.

Polyvinyl alcohol homopolymer means polyvinyl alcohol comprising polyvinyl alcohol units and optionally but preferably polyvinylacetate units. Polyvinyl alcohol copolymer means a polymer comprising polyvinyl alcohol units, optionally but preferably polyvinyl acetate units and anionically modified polyvinylalcohol units.

The anionic monomer unit present in the polyvinyl alcohol copolymer of the first resin, present in the polyvinyl alcohol copolymer of the second resin, or a mixture thereof may independently be selected from the group consisting of anionic monomers derived from of vinyl acetate, alkyl acrylates, monoalkyl maleate, dialkyl maleate, monomethyl maleate, dimethyl maleate, maleic anhydride, monoalkyl fumarate, dialkyl fumarate, monomethyl fumarate, dimethyl fumarate, fumaric anhydride, monomethyl itaconate, dimethyl itaconate, itaconic anhydride, monoalkyl citraconate, dialkyl citraconate, citraconic anhydride, monoalkyl mesaconate, dialkyl mesaconate, mesaconic anhydride, monoalkyl glutaconate, dialkyl glutaconate, glutaconic anhydride, vinyl sulfonate, alkyl sulfonate, ethylene sulfonate, 2-acrylamido-1-methyl propane sulfonate, 2-acrylamide-2-methylpropane sulfonate, 2-methylacrylamido-2-methylpropane sulfonate, 2-sulfoethyl acrylate, alkali metal salts thereof, esters thereof, and combinations thereof, preferably, wherein the anionic monomer unit is selected from the group consisting of anionic monomers derived from monoalkyl maleate, dialkyl maleate, maleic anhydride, alkali metal salts thereof, esters thereof, and combinations thereof, more preferably wherein the anionic monomer unit is selected from the group consisting of anionic monomers derived from monomethyl maleate, dimethyl maleate, maleic any hydride, alkali metal salts thereof, esters thereof, and combinations thereof.

Preferably, the polyvinyl alcohol copolymers if present in the first or second water soluble film independently comprise from 1 mol% to 8 mol% more preferably from 2 mol% to 5 mol%, most preferably from 3 mol% to 4 mol% of the anionic monomer unit with respect to total polyvinyl alcohol copolymer present.

Preferably, the polyvinyl alcohol homopolymer(s) and the polyvinyl alcohol copolymer(s) if present in the first and the second water soluble film independently have a degree of hydrolysis of from 80% to 99% preferably from 85% to 95% more preferably from 86% and 93%.

Preferably, the polyvinyl alcohol homopolymer(s) and the polyvinyl alcohol copolymer(s) if present in the first and the second water soluble film independently have a 4% solution viscosity in demineralized water at 25 °C in a range of 4x10⁻³ Pa s (4 cP) to 4x10⁻² Pa s (40cP), preferably of 1x10⁻² Pa s (10cP) to 3x10⁻² Pa s (30 cP), more preferably of 1.2x10⁻² Pa s (12 cP) to 2.5x10⁻² Pa s (25 cP).

Preferably, the first water-soluble film and the second water-soluble film independently have a water soluble resin content of between 30% and 90%, more preferably between 40% and 80%, even more preferably between 50% and 75%, most preferably between 60% and 70% by weight of the film.

Those skilled in the art will be aware of how to ensure a difference in water capacity of the first water-soluble film and the second water-soluble film. Without wishing to be bound by theory, water capacity could be differed by differing degree of hydrolysis of the polyvinyl alcohol polymer, the molecular weight of the polyvinyl alcohol polymers, the anionic type and content of the water-soluble films or a mixture thereof. Those skilled in the art will be aware of how to alter the water capacity of the water-soluble films.

Altering the plasticizer present in the water-soluble film can also alter the water capacity of the water-soluble film. Those skilled in the art will be aware of suitable plasticisers for use in the water-soluble film and how to use them to alter the water capacity. Preferably the first water-soluble film comprises a first plasticizer system selected from polyols, sugar alcohols, or a mixture thereof, preferably wherein the polyols are selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof; and preferably wherein the sugar alcohols are selected from the group consisting of isomalt, maltitol, sorbitol, xylitol, erythritol, adonitol, dulcitol, pentaerythritol and mannitol, or a mixture thereof; most preferably wherein the plasticizer is selected from the group consisting of glycerin, sorbitol, triethyleneglycol, 1,2-propylene glycol, dipropylene glycol, 2-methyl-1,3-propanediol, trimethylolpropane, (should we add PEG in most preferred list due to recent Henkel interest in this plasticizer?) or a combination thereof, and the second water-soluble film comprises a second plasticizer system selected from polyols, sugar alcohols, or a mixture thereof, preferably wherein the polyols are selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof; and preferably wherein the sugar alcohols are selected from the group consisting of isomalt, maltitol, sorbitol, xylitol, erythritol, adonitol, dulcitol, pentaerythritol and mannitol, or a mixture thereof; most preferably wherein the plasticizer is selected from the group consisting of glycerin, sorbitol, triethyleneglycol, 1,2-propylene glycol, dipropylene glycol, 2-methyl-1,3-propanediol, trimethylolpropane, polyethylene glycols up to 400 MW or a combination thereof, and wherein the first plasticizer system is different to the second plasticizer system.

Preferably, the first water-soluble film and the second water-soluble film independently further contain auxiliary agents and processing agents, such as, but not limited to plasticizer compatibilizers, surfactants, lubricants, release agents, fillers, extenders, cross-linking agents, antiblocking agents, antioxidants, detackifying agents, antifoams, nanoparticles such as layered silicate-type nanoclays (e.g., sodium montmorillonite), bleaching agents (e.g., sodium metabisulfite, sodium bisulfite or others), and other functional ingredients, in amounts suitable for their intended purposes.

Alternatively, water capacity can be controlled by addition of a water absorbing powdering agent on the outside of the second water-soluble film.

The first and or second film may independently be opaque, transparent or translucent. The first and or second film may independently comprise a printed area. The printed area may cover between 10% and 80% of the surface of the film; or between 10% and 80% of the surface of the film that is in contact with the internal space of the compartment; or between 10% and 80% of the surface of the film and between 10 and 80% of the surface of the compartment.

The area of print may cover an uninterrupted portion of the film or it may cover parts thereof, i.e. comprise smaller areas of print, the sum of which represents between 10% and 80% of the surface of the film or the surface of the film in contact with the internal space of the compartment or both.

The area of print may comprise inks, pigments, dyes, blueing agents or mixtures thereof. The area of print may be opaque, translucent or transparent.

The area of print may comprise a single colour or maybe comprise multiple colours, even three colours. The area of print may comprise white, black, blue, red colours, or a mixture thereof. The print may be present as a layer on the surface of the film or may at least partially penetrate into the film. The film will comprise a first side and a second side. The area of print may be present on either side of the film, or be present on both sides of the film. Alternatively, the area of print may be at least partially comprised within the film itself.

The area of print may be achieved using standard techniques, such as flexographic printing or inkjet printing. Preferably, the area of print is achieved via flexographic printing, in which a film is printed, then moulded into the shape of an open compartment. This compartment is then filled with a detergent composition and a second film placed over the compartment and sealed to the first film. The area of print may be on either or both sides of the film.

Alternatively, an ink or pigment may be added during the manufacture of the film such that all or at least part of the film is coloured.

The first and or second film may independently comprise an aversive agent, for example a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1 to 5000ppm, or even 100 to 2500ppm, or even 250 to 2000ppm.

The water-soluble film or water-soluble unit dose article or both may be coated in a lubricating agent. Preferably, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

### Third water-soluble film

The water-soluble unit dose article may comprise a third water-soluble film.

The third water-soluble film may have a water capacity from 1.5% to 12%, preferably from 2.5% to 10%, more preferably from 3.5% to 8%. Alternatively, the third water-soluble film has a water capacity from 1% to 10%, preferably from 2% to 8%, more preferably from 3% to 6%.

The third water-soluble film may have a thickness before incorporation into the unit dose article of between 40 microns and 100 microns, preferably between 60 microns and 90 microns, more preferably between 70 microns and 80 microns.

The third water-soluble film according to the invention is preferably a single layer film, more preferably manufactured via solution casting.

Preferably, the third water soluble film comprises a third water soluble resin. Preferably, the third water soluble resin comprises at least one polyvinyl alcohol homopolymer or at least one polyvinylalcohol copolymer or a blend thereof.

The third water soluble resin may comprise a blend of a polyvinyl alcohol homopolymer and a polyvinyl alcohol copolymer comprising an anionic monomer unit, preferably wherein the blend comprises from 0% to 70% by weight of the third water soluble resin of the polyvinyl alcohol copolymer comprising an anionic monomer unit and from 30% to about 100% by weight of the third water soluble resin of the polyvinyl alcohol homopolymer, more preferably wherein the blend comprises from 10% to 70%, even more preferably from 15% to less than 65%, even more preferably from 20% to 50%, most preferably from 30% to 40% of the polyvinyl alcohol copolymer comprising an anionic monomer unit and from 30% to 90%, or greater than 35% to 85%, or from 50% to 80%, or from 60 wt% to 70 wt% by weight of the third water soluble resin of the polyvinyl alcohol homopolymer, based on the total weight of the third water soluble resin. The polyvinyl alcohol copolymer can be present at a concentration which, together with the concentration of the polyvinyl alcohol homopolymer, sums to 100%.

The third water soluble resin may comprise 100% by weight of the third water soluble resin of a polyvinyl alcohol copolymer comprising an anionic monomer unit.

Polyvinyl alcohol homopolymer means polyvinyl alcohol comprising polyvinyl alcohol units and optionally but preferably polyvinylacetate units. Polyvinyl alcohol copolymer means a polymer comprising polyvinyl alcohol units, optionally but preferably polyvinyl acetate units and anionically modified polyvinylalcohol units.

The anionic monomer unit present in the polyvinyl alcohol copolymer of the third resin, present in the polyvinyl alcohol copolymer of the second resin, or a mixture thereof may independently be selected from the group consisting of anionic monomers derived from of vinyl acetate, alkyl acrylates, monoalkyl maleate, dialkyl maleate, monomethyl maleate, dimethyl maleate, maleic anhydride, monoalkyl fumarate, dialkyl fumarate, monomethyl fumarate, dimethyl fumarate, fumaric anhydride, monomethyl itaconate, dimethyl itaconate, itaconic anhydride, monoalkyl citraconate, dialkyl citraconate, citraconic anhydride, monoalkyl mesaconate, dialkyl mesaconate, mesaconic anhydride, monoalkyl glutaconate, dialkyl glutaconate, glutaconic anhydride, vinyl sulfonate, alkyl sulfonate, ethylene sulfonate, 2-acrylamido-1-methyl propane sulfonate, 2-acrylamide-2-methylpropane sulfonate, 2-methylacrylamido-2-methylpropane sulfonate, 2-sulfoethyl acrylate, alkali metal salts thereof, esters thereof, and combinations thereof, preferably, wherein the anionic monomer unit is selected from the group consisting of anionic monomers derived from monoalkyl maleate, dialkyl maleate, maleic anhydride, alkali metal salts thereof, esters thereof, and combinations thereof, more preferably wherein the anionic monomer unit is selected from the group consisting of anionic monomers derived from monomethyl maleate, dimethyl maleate, maleic any hydride, alkali metal salts thereof, esters thereof, and combinations thereof.

Preferably, the polyvinyl alcohol copolymers if present in the third water soluble film comprises from 1 mol% to 8 mol% more preferably from 2 mol% to 5 mol%, most preferably from 3 mol% to 4 mol% of the anionic monomer unit with respect to total polyvinyl alcohol copolymer present.

Preferably, the polyvinyl alcohol homopolymer(s) and the polyvinyl alcohol copolymer(s) if present in the third water soluble film has a degree of hydrolysis of from 80% to 99% preferably from 85% to 95% more preferably from 86% and 93%.

Preferably, the polyvinyl alcohol homopolymer(s) and the polyvinyl alcohol copolymer(s) if present in the third water soluble film has a 4% solution viscosity in demineralized water at 25 °C in a range of 4 cP to 40cP, preferably of 10cP to 30 cP, more preferably of 12 cP to 25 cP.

Preferably, the third water-soluble film has a water soluble resin content of between 30% and 90%, more preferably between 40% and 80%, even more preferably between 50% and 75%, most preferably between 60% and 70% by weight of the film.

Altering the plasticizer present in the water-soluble film can also alter the water capacity of the water-soluble film. Those skilled in the art will be aware of suitable plasticisers for use in the water-soluble film and how to use them to alter the water capacity. Preferably the third water-soluble film comprises a third plasticizer system selected from polyols, sugar alcohols, or a mixture thereof, preferably wherein the polyols are selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof; and preferably wherein the sugar alcohols are selected from the group consisting of isomalt, maltitol, sorbitol, xylitol, erythritol, adonitol, dulcitol, pentaerythritol and mannitol, or a mixture thereof; most preferably wherein the plasticizer is selected from the group consisting of glycerin, sorbitol, triethyleneglycol, 1,2-propylene glycol, dipropylene glycol, 2-methyl-1,3-propanediol, trimethylolpropane, or a combination thereof.

Preferably, the third water-soluble film further contains auxiliary agents and processing agents, such as, but not limited to plasticizer compatibilizers, surfactants, lubricants, release agents, fillers, extenders, cross-linking agents, antiblocking agents, antioxidants, detackifying agents, antifoams, nanoparticles such as layered silicate-type nanoclays (e.g., sodium montmorillonite), bleaching agents (e.g., sodium metabisulfite, sodium bisulfite or others), and other functional ingredients, in amounts suitable for their intended purposes.

Alternatively, water capacity can be controlled by addition of a water absorbing powdering agent on the outside of the second water-soluble film.

The third film may be opaque, transparent or translucent. The third film may comprise a printed area. The printed area may cover between 10% and 80% of the surface of the film; or between 10% and 80% of the surface of the film that is in contact with the internal space of the compartment; or between 10% and 80% of the surface of the film and between 10 and 80% of the surface of the compartment.

The area of print may cover an uninterrupted portion of the film or it may cover parts thereof, i.e. comprise smaller areas of print, the sum of which represents between 10% and 80% of the surface of the film or the surface of the film in contact with the internal space of the compartment or both.

The area of print may comprise inks, pigments, dyes, blueing agents or mixtures thereof. The area of print may be opaque, translucent or transparent.

The area of print may comprise a single colour or maybe comprise multiple colours, even three colours. The area of print may comprise white, black, blue, red colours, or a mixture thereof. The print may be present as a layer on the surface of the film or may at least partially penetrate into the film. The film will comprise a first side and a second side. The area of print may be present on either side of the film, or be present on both sides of the film. Alternatively, the area of print may be at least partially comprised within the film itself.

The area of print may be achieved using standard techniques, such as flexographic printing or inkjet printing. Preferably, the area of print is achieved via flexographic printing, in which a film is printed, then moulded into the shape of an open compartment. This compartment is then filled with a detergent composition and a second film placed over the compartment and sealed to the first film. The area of print may be on either or both sides of the film.

Alternatively, an ink or pigment may be added during the manufacture of the film such that all or at least part of the film is coloured.

The third film may comprise an aversive agent, for example a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1 to 5000ppm, or even 100 to 2500ppm, or even 250 to 2000ppm.

The third film may be coated in a lubricating agent. Preferably, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

### Detergent composition

The detergent composition may be a laundry detergent composition, an automatic dishwashing composition, a hard surface cleaning composition, or a combination thereof.

The detergent composition may comprise a solid, a liquid or a mixture thereof. The term liquid includes a gel, a solution, a dispersion, a paste, or a mixture thereof. The solid may be a powder. By powder we herein mean that the detergent composition may comprise solid particulates or may be a single homogenous solid. In some examples, the powder detergent composition comprises particles. This means that the powder detergent composition comprises individual solid particles as opposed to the solid being a single homogenous solid. The particles may be free-flowing or may be compacted.

A laundry detergent composition can be used in a fabric hand wash operation or may be used in an automatic machine fabric wash operation, for example in an automatic machine fabric wash operation.

The laundry detergent composition may comprise a non-soap surfactant, wherein the non-soap surfactant comprises an anionic non-soap surfactant and a non-ionic surfactant. The laundry detergent composition may comprise between 10% and 60%, or between 20% and 55% by weight of the laundry detergent composition of the non-soap surfactant. The weight ratio of non-soap anionic surfactant to nonionic surfactant may be from 1:1 to 20: 1, from 1.5:1 to 17.5: 1, from 2: 1 to 15: 1, or from 2.5:1 to 13: 1.

Preferably, the non-soap anionic surfactants comprises linear alkylbenzene sulphonate, alkyl sulphate or a mixture thereof. The weight ratio of linear alkylbenzene sulphonate to alkyl sulphate may be from 1:2 to 9:1, from 1: 1 to 7:1, from 1: 1 to 5:1, or from 1: 1 to 4:1. The linear alkylbenzene sulphonate may be C₁₀-C₁₆ alkyl benzene sulfonic acids, or C₁₁-C₁₄ alkyl benzene sulfonic acids. By 'linear', we herein mean the alkyl group is linear. The alkyl sulphate anionic surfactant may comprise alkoxylated alkyl sulphate or non-alkoxylated alkyl sulphate or a mixture thereof. The alkoxylated alkyl sulphate anionic surfactant may comprise an ethoxylated alkyl sulphate anionic surfactant. The alkyl sulphate anionic surfactant may comprise an ethoxylated alkyl sulphate anionic surfactant with a mol average degree of ethoxylation from 1 to 5, from 1 to 3, or from 2 to 3. The alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. The alkyl fraction of the alkyl sulphate anionic surfactant may be derived from fatty alcohols, oxo-synthesized alcohols, Guerbet alcohols, or mixtures thereof. The laundry detergent composition may comprise between 10% and 50%, preferably between 15% and 45%, more preferably between 20% and 40%, most preferably between 30% and 40% by weight of the laundry detergent composition of the non-soap anionic surfactant.

The non-ionic surfactant may be selected from alcohol alkoxylate, an oxo-synthesised alcohol alkoxylate, Guerbet alcohol alkoxylates, alkyl phenol alcohol alkoxylates, or a mixture thereof. The laundry detergent composition may comprise between 0.01% and 10%, preferably between 0.01% and 8%, more preferably between 0.1% and 6%, most preferably between 0.15% and 5% by weight of the liquid laundry detergent composition of a non-ionic surfactant.

The laundry detergent composition may comprise between 1.5% and 20%, preferably between 2% and 15%, more preferably between 3% and 10%, most preferably between 4% and 8% by weight of the laundry detergent composition of soap, preferably a fatty acid salt, more preferably an amine neutralized fatty acid salt, wherein preferably the amine is an alkanolamine for example selected from monoethanolamine, diethanolamine, triethanolamine or a mixture thereof, most preferably monoethanolamine.

The laundry detergent composition is preferably a liquid laundry detergent composition. The liquid laundry detergent composition may comprise less than 15%, or less than 12% by weight of the liquid laundry detergent composition of water. The laundry detergent composition is preferably a liquid laundry detergent composition comprising a non-aqueous solvent selected from 1,2-propanediol, dipropylene glycol, tripropyleneglycol, glycerol, sorbitol, polyethylene glycol or a mixture thereof. The liquid laundry detergent composition may comprise between 10% and 40%, or between 15% and 30% by weight of the liquid laundry detergent composition of the non-aqueous solvent.

The laundry detergent composition may comprise a perfume. The laundry detergent composition may comprise an adjunct ingredient selected from the group comprising builders including enzymes, citrate, bleach, bleach catalyst, dye, hueing dye, brightener, cleaning polymers including alkoxylated polyamines and polyethyleneimines, soil release polymer, surfactant, solvent, dye transfer inhibitors, chelant, encapsulated perfume, polycarboxylates, structurant, pH trimming agents, and mixtures thereof.

The laundry detergent composition preferably has a pH between 6 and 10, between 6.5 and 8.9, or between 7 and 8, wherein the pH of the laundry detergent composition is measured as a 10% product concentration in demineralized water at 20°C.

When liquid, the laundry detergent composition may be Newtonian or non-Newtonian. Preferably, the liquid laundry detergent composition is non-Newtonian. Without wishing to be bound by theory, a non-Newtonian liquid has properties that differ from those of a Newtonian liquid, more specifically, the viscosity of non-Newtonian liquids is dependent on shear rate, while a Newtonian liquid has a constant viscosity independent of the applied shear rate. The decreased viscosity upon shear application for non-Newtonian liquids is thought to further facilitate liquid detergent dissolution. The liquid laundry detergent composition described herein can have any suitable viscosity depending on factors such as formulated ingredients and purpose of the composition.

An automatic dishwashing detergent composition can be used in an automatic dishwasher. The automatic dishwashing detergent composition can be presented in different physical forms, for example a liquid, a solid or a mixture thereof. The term liquid includes a gel, a solution, a dispersion, a paste, or a mixture thereof. The solid may be a powder. By powder we herein mean that the detergent composition may comprise solid particulates or may be a single homogenous solid. In some examples, the powder detergent composition comprises particles. This means that the powder detergent composition comprises individual solid particles as opposed to the solid being a single homogenous solid. The particles may be free-flowing or may be compacted. The detergent composition may be presented in the form of a multi-compartment pack comprising compartments with compositions in the different physical forms identified above or mixtures thereof.

Preferably, the multi-compartment pack comprises a liquid compartment. More preferably, the liquid compartment comprises surfactants and other processing aids such as solvents. Example liquid automatic dishwashing detergents comprise surfactants, preferably non-ionic surfactants.

Suitable nonionic surfactants include: i) ethoxylated non-ionic surfactants prepared by the reaction of a monohydroxy alkanol or alkyphenol with 6 to 20 carbon atoms with preferably at least 12 moles particularly preferred at least 16 moles, and still more preferred at least 20 moles of ethylene oxide per mole of alcohol or alkylphenol; ii) alcohol alkoxylated surfactants having a from 6 to 20 carbon atoms and at least one ethoxy and propoxy group. Preferred for use herein are mixtures of surfactants i) and ii).

Another suitable non-ionic surfactants are epoxy-capped poly(oxyalkylated) alcohols represented by the formula:

R1O[CH2CH(CH3)O]x[CH2CH2O]y[CH2CH(OH)R2] (I)

wherein R1 is a linear or branched, aliphatic hydrocarbon radical having from 4 to 18 carbon atoms; R2 is a linear or branched aliphatic hydrocarbon radical having from 2 to 26 carbon atoms; x is an integer having an average value of from 0.5 to 1.5, more preferably about 1; and y is an integer having a value of at least 15, more preferably at least 20.

Preferably, the surfactant of formula I, at least about 10 carbon atoms in the terminal epoxide unit [CH2CH(OH)R2]. Suitable surfactants of formula I, according to the present invention, are Olin Corporation's POLY-TERGENT^{®} SLF-18B nonionic surfactants, as described, for example, in WO 94/22800, published October 13, 1994 by Olin Corporation.

Amine oxides surfactants useful herein include linear and branched compounds having the formula: 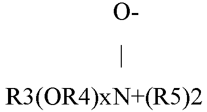 wherein R3 is selected from an alkyl, hydroxyalkyl, acylamidopropoyl and alkyl phenyl group, or mixtures thereof, containing from 8 to 26 carbon atoms, preferably 8 to 18 carbon atoms; R4 is an alkylene or hydroxyalkylene group containing from 2 to 3 carbon atoms, preferably 2 carbon atoms, or mixtures thereof; x is from 0 to 5, preferably from 0 to 3; and each R5 is an alkyl or hydroxyalkyl group containing from 1 to 3, preferably from 1 to 2 carbon atoms, or a polyethylene oxide group containing from 1 to 3, preferable 1, ethylene oxide groups. The R5 groups can be attached to each other, e.g., through an oxygen or nitrogen atom, to form a ring structure.

These amine oxide surfactants in particular include C10-C18 alkyl dimethyl amine oxides and C8-C18 alkoxy ethyl dihydroxyethyl amine oxides. Examples of such materials include dimethyloctylamine oxide, diethyldecylamine oxide, bis-(2-hydroxyethyl)dodecylamine oxide, dimethyldodecylamine oxide, dipropyltetradecylamine oxide, methylethylhexadecylamine oxide, dodecylamidopropyl dimethylamine oxide, cetyl dimethylamine oxide, stearyl dimethylamine oxide, tallow dimethylamine oxide and dimethyl-2-hydroxyoctadecylamine oxide. Preferred are C10-C18 alkyl dimethylamine oxide, and C10-18 acylamido alkyl dimethylamine oxide. Surfactants may be present in amounts from 0 to 15% by weight, preferably from 0.1% to 10%, and most preferably from 0.25% to 8% by weight of the total composition.

The multi-compartment pack can also comprise a free-flowing powder compartment.

Example free-flowing powder automatic dishwashing detergents comprise a complexing agent capable of sequestering hardness ions, particularly calcium and/or magnesium. In some examples, the free-flowing powder automatic dishwashing detergent composition comprises between 15% to 40%, or between 20$% to 40% by weight of the composition of a complexing agent consisting of methylglycine-N,N-diacetic acid (MGDA), citric acid, glutamic acid-N,N-diacetic acid (GLDA) its salts and mixtures thereof.

In some examples, the free-flowing powder automatic dishwashing detergent comprises from 10% to 30%, or 5% to 25% by weight of the composition of a builder or alkalinity source.

In some examples, the free-flowing powder automatic dishwashing detergent comprises a perfume. In some examples, the automatic dishwashing detergent comprises an adjunct ingredient selected from the group comprising complexing agents, builders, enzymes, bleach, bleach catalyst, bleach activator, polymers including dispersant polymers, soil release polymers, cleaning polymers and surface modification polymers, surfactants, metal care agents and glass care agents.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### EXAMPLES

The impact of choice of film onto which sealing water has been applied on the resulting seal strength of the combined water soluble films has been explored for a series of water soluble films with different inherent water capacity.

### Test methods :

### Water capacity :

Water capacity was measured with a DVS (Dynamic Vapor Sorption) Instrument. The instrument used was a SPS-DVS (model SPSx-1µ-High load with permeability kit) from ProUmid. The DVS uses gravimetry for determination of moisture sorption/desorption and is fully automated.

The accuracy of the system is ± 0.6% for the RH (relative humidity) over a range of 0-98% and ± 0.3°C at a temperature of 25°C. The temperature can range from +5 to +60 °C. The microbalance in the instrument is capable of resolving 0.1 µg in mass change. 2 replicates of each film are measured and the average water capacity value is reported.

For the specific conditions of the test, a 6 pan carousel which allows to test 5 films simultaneously (1 pan is used as a reference for the microbalance and needs to remain empty) was used.

Each pan has an aluminum ring with screws, designed to fix the films. A piece of film was placed onto a pan and after gentle stretching, the ring was placed on top and the film was tightly fixed with the screws and excess film removed. The film covering the pan surface had an 80 mm diameter.

The temperature was fixed at 20°C. Relative humidity (RH) was set at 35% for 6 hours, and then gradually raised onto 50 % in 5 min. The RH remained at 50 % for 12hours. The total duration of the measurement was 18 hours.

The cycle time (= time between measuring each pan) was set to 10 min and the DVS records each weight result vs. time and calculates automatically the % Dm (relative mass variation versus starting weight of the film, i.e. 10% reflects a 10% film weight increase versus starting film weight).

The water capacity (or %Dm gained over 50%RH cycle during the fixed time of 12 hours at 20°C) was calculated by difference of the value %Dm at 50%RH (last value measured at 50%RH) minus %Dm at 35%RH (last value before going up to 50%RH).

### Seal strength :

Film samples are pre-conditioned at 20°C 40% relative humidity for 24h prior to measuring. 2 films are sealed together through their matt sides, their glossy sides facing outwards. 0.5ml of sealing water is homogeneously applied using an automated anilox roller on a strip of a first test film (dimensions : 300mm length - 30mm width), and is consequently sealed to a strip of a second non-wetted test film (dimensions : 200mm length - 30mm width) which is fixed to the test platform by double-sided tape. The resulting seal strength is consequently measured using a pre-programmed Texture Analyzer (model TA.XTplus, available from Stable Micro Systems) fitted with a Sliding platform and a 90° Peel rig, and is expressed as the average peel force (Newton) required to re-separate the two films from each other (at a peel speed : 20mm/s). Test variability is minimized through automation of both the sealing as well as the peeling steps, and averaging of test result across 5 test replicates, enabling accurate comparison of the different test combinations.

### Test materials* :

- Test film 1 : water soluble film comprising 50/50 blend of two different polyvinyl alcohol homopolymers, received from the MonoSol company
- Test film 2 : blend of a polyvinyl alcohol homopolymer / carboxylated polyvinyl alcohol copolymer, received from the MonoSol company
- Test film 3** : blend of a polyvinyl alcohol homopolymer / carboxylated polyvinyl alcohol copolymer, received from the MonoSol company
- Test film 4 : M8630 - water soluble film comprising polyvinyl alcohol / monocarboxylate copolymer resin commercially available from the MonoSol company

*all films comprising substantially the same level of polymeric resin, water and plasticizer system.
** different blend versus test film 2 (higher relative polyvinyl alcohol homopolymer content, lower viscosity and degree of hydrolysis for homopolymer, same anionic copolymer, resulting in a net decreased film crystallinity)

### Test results :

Table 1 summarizes the water capacity for the different test films, following the test method described herein. Films are ranked following increasing water capacity. Table 2 summarizes the average resulting peel strengths, following the test method described herein. From these average peel force data it can clearly be seen that stronger seals are achieved when the sealing water has been applied on the film with the lowest water capacity prior to combining both films together.

**Table 1 : Water capacity of different PVA test films**

| | Water capacity (in %Dm) |
|---|---|
| Test film 1 | 3.470% |
| Test film 2 | 4.466% |
| Test film 3 | 4.545% |
| Test film 4 | 4.953% |

**Table 2 : Seal strength**

| Non-Solvent wetted film (A) | Solvent wetted film (B) | Delta capacity (A-B) | Average peel force |
|---|---|---|---|
| Test film 2 | Test film 3 | -0.079% | 7.82N |
| Test film 3 | Test film 2 | 0.079% | 8.74N |
| | | | |
| Test film 1 | Test film 4 | -1.483% | 2.13N |
| Test film 4 | Test film 1 | 1.483% | 9.14N |
| | | | |
| Test film 3 | Test film 4 | -0.408 | 3.39N |
| Test film 4 | Test film 3 | 0.408 | 8.84N |
| | | | |
| Test film 1 | Test film 3 | -1.075 | 4.28N |
| Test film 3 | Test film 1 | 1.075 | 6.90N |

The following are exemplary water soluble unit dose formulations comprised in a unit dose article comprising the water-soluble films according to the present invention. The composition can be part of a single chamber water soluble unit dose article or can be split over multiple compartments resulting in below "averaged across compartments" full article composition.

**Table 3**

| ***Ingredients*** | Composition 1 (wt%) |
|---|---|
| Fatty alcohol ethoxylate non-ionic surfactant, C₁₂₋₁₄ average degree of ethoxylation of 7 | 3.8 |
| Lutensol XL100 | 0.5 |
| Linear C₁₁₋₁₄ alkylbenzene sulphonate | 24.6 |
| AE3S Ethoxylated alkyl sulphate with an average degree of ethoxylation of 3 | 12.5 |
| Citric acid | 0.7 |
| Palm Kernel Fatty acid | 5.3 |
| Nuclease enzyme* (wt% active protein) | 0.01 |
| Protease enzyme (wt% active protein) | 0.07 |
| Amylase enzyme (wt% active protein) | 0.005 |
| Xyloglucanese enzyme (wt% active protein) | 0.005 |
| Mannanase enzyme (wt% active protein) | 0.003 |
| Ethoxylated polyethyleneimine | 1.6 |
| Amphiphilic graft copolymer | 2.6 |
| Zwitterionic polyamine | 1.8 |
| Anionic polyester terephthalate | 0.6 |
| HEDP | 2.2 |
| Brightener 49 | 0.4 |
| Silicone anti-foam | 0.3 |
| Hueing dye | 0.05 |
| 1,2 PropaneDiol | 12.3 |
| Glycerine | 4.7 |
| DPG (DiPropyleneGlycol) | 1.7 |
| TPG (TriPropyleneGlycol) | 0.1 |
| Sorbitol | 0.1 |
| Monoethanolamine | 10.2 |
| K2SO3 | 0.4 |
| MgCl2 | 0.3 |
| water | 10.8 |
| Hydrogenated castor oil | 0.1 |
| Perfume | 2.1 |
| Aesthetic dye & Minors | Balance to 100 |
| pH (10% product concentration in demineralized water at 20°C) | 7.4 |

| | |
|---|---|
| *Nuclease enzyme is as claimed in co-pending European application 19219568.3 | |

The following is a multi-compartment water soluble unit dose laundry article comprising a larger bottom compartment while having two smaller compartments in a side by side configuration superposed on top of the bottom compartment, following the Ariel 3-in-1 Pods design, as commercially available in the UK in January 2020. The below compositions are enclosed water-soluble films according to the present invention.

**Table 4**

| ***Ingredients*** | Full article Composition (wt%) | Bottom compartment Composition (wt%) | Top compartment Composition 1 (wt%) | Top compartment Composition 2 (wt%) |
|---|---|---|---|---|
| Volume | 25.5ml | 22.3ml | 1.6ml | 1.6ml |
| Fatty alcohol ethoxylate non-ionic surfactant, C₁₂₋₁₄ average degree of ethoxylation of 7 | 3.5 | 3.7 | 2.6 | 1.6 |
| Lutensol XL100 | 0.4 | 0.5 | - | - |
| Linear C₁₁₋₁₄ alkylbenzene sulphonate | 24.2 | 24.9 | 18.9 | 19.4 |
| AE3S Ethoxylated alkyl sulphate with an average degree of ethoxylation of 3 | 12.3 | 12.6 | 9.7 | 9.7 |
| Citric acid | 0.7 | 0.7 | 0.5 | 0.5 |
| Palm Kernel Fatty acid | 5.2 | 5.4 | 4.1 | 4.1 |
| Nuclease enzyme* (wt% active protein) | 0.009 | 0.011 | - | - |
| Protease enzyme (wt% active protein) | 0.05 | 0.06 | - | - |
| Amylase enzyme (wt% active protein) | 0.004 | 0.005 | - | - |
| Xyloglucanese enzyme (wt% active protein) | 0.005 | - | 0.073 | - |
| Mannanase enzyme (wt% active protein) | 0.003 | 0.003 | - | - |
| Lipase enzyme (wt% active protein) | 0.012 | - | 0.187 | - |
| Ethoxylated polyethyleneimine | 1.5 | 1.6 | 1.2 | 1.2 |
| Amphiphilic graft copolymer | 2.0 | 2.3 | - | - |
| Zwitterionic polyamine | 1.8 | 1.9 | 1.4 | 1.4 |
| Anionic polyester terephthalate | 0.4 | - | - | 5.8 |
| HEDP | 2.2 | 2.2 | 1.7 | 1.7 |
| Brightener 49 | 0.3 | 0.4 | 0.01 | 0.01 |
| Silicone anti-foam | 0.3 | 0.3 | - | - |
| Hueing dye | 0.04 | - | 0.69 | - |
| 1,2 PropaneDiol | 13.6 | 12.8 | 11.3 | 26.4 |
| Glycerine | 6.0 | 5.0 | 17.3 | 8.3 |
| DPG (DiPropyleneGlycol) | 0.8 | 0.8 | 0.6 | 0.6 |
| TPG (TriPropyleneGlycol) | 0.06 | 0.06 | - | - |
| Sorbitol | 0.6 | 0.05 | 8.8 | - |
| Monoethanolamine | 10.0 | 10.4 | 7.9 | 8.0 |
| K2SO3 | 0.4 | 0.4 | 0.04 | 0.4 |
| MgCl2 | 0.3 | 0.3 | 0.2 | 0.2 |
| water | 10.9 | 10.9 | 11.8 | 9.9 |
| Hydrogenated castor oil | 0.1 | 0.1 | - | 0.1 |
| Perfume | 1.6 | 1.9 | - | - |
| Aesthetic dye & Minors (incl. preservative) | Balance to 100 | Balance to 100 | Balance to 100 | Balance to 100 |
| pH (10% product concentration in demineralized water at 20°C) | 7.4 | 7.4 | 7.4 | 7.4 |

| | | | | |
|---|---|---|---|---|
| *Nuclease enzyme is as claimed in co-pending European application 19219568.3 | | | | |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A process for manufacturing a water-soluble unit dose article having improved seal strength, wherein the water-soluble unit dose article comprises a detergent composition, comprises the steps of
a. thermoforming a first water-soluble film into a mould to create an open cavity;
b. filling the open cavity with the detergent composition;
c. closing the open cavity by positioning a second water-soluble film in contact with the first water-soluble film such that the second water-soluble film closes the open cavity;
d. sealing the first film and second film together via solvent sealing, wherein the sealing solvent comprises water;
wherein the first water-soluble film has a first water capacity, and wherein the second water-soluble film has a second water capacity, and wherein the first water capacity is different to the second water capacity, and wherein 'water capacity' means the capacity of the film to absorb water over a fixed period of time at a particular relative humidity and temperature, measured as a mass increase of the film being tested; and
wherein the percentage difference in water capacity between the water capacity of the first water soluble film and the second water-soluble film is between 0.01% and 5%; and
wherein the sealing solvent is applied prior to step c and the sealing solvent is applied to the film having the lowest water capacity;
wherein the first water soluble film comprises a first water soluble resin and the second water soluble film comprises a second water soluble resin, wherein the first water soluble resin comprises at least one polyvinyl alcohol homopolymer or at least one polyvinylalcohol copolymer or a blend thereof and the second water soluble resin comprises at least one polyvinyl alcohol homopolymer or at least one polyvinylalcohol copolymer or a blend thereof.

2. The process according to claim 1, wherein the water capacity of the first water-soluble film is greater than the water capacity of the second water-soluble film.

3. The process according to claim 2, wherein the second water-soluble film has a water capacity from 1% to 10%, preferably from 2% to 8%, more preferably from 3 % to 6 %.

4. The process according to claims 2 or 3, wherein the first water-soluble film has a water capacity from 1.5% to 12%, preferably from 2.5% to 10%, more preferably from 3.5% to 8%.

5. The process according to any preceding claims wherein the percentage difference in water capacity is from 0.03% to 3.5 %, most preferably from 0.05% to 2%.

6. The process according to any preceding claims, wherein the first water-soluble film and the second water-soluble film are chemically different to one another.

7. The process according to any preceding claims wherein the sealing solvent comprises 95% or greater, by weight of the sealing solvent, of water, preferably 100% by weight of the sealing solvent of water.

8. The process according to any preceding claims wherein the polymer system of the first water soluble resin is different from the polymer system of the second water soluble resin.

9. The process according to claim 8, wherein the first water soluble resin comprises a blend of a polyvinyl alcohol homopolymer and a polyvinyl alcohol copolymer comprising an anionic monomer unit, preferably wherein the blend comprises from 0% to 70% of polyvinyl alcohol copolymer comprising an anionic monomer unit and from 30% to about 100% of the polyvinyl alcohol homopolymer, based on the total weight of the first water soluble resin in the first film, more preferably wherein the blend comprises from 10% to 70%, even more preferably from 15% to less than 65%, even more preferably from 20% to 50%, most preferably from 30% to 40% of the polyvinyl alcohol copolymer comprising an anionic monomer unit, and from 30% to 90%, or greater than 35% to 85%, or from 50% to 80%, or from 60 wt% to 70 wt% by weight of the first water soluble resin of the polyvinyl alcohol homopolymer, based on the total weight of the first water soluble resin in the first film.

10. The process according to claim 8 wherein the first water soluble resin comprises 100% by weight of the first water soluble resin of a polyvinyl alcohol copolymer comprising an anionic monomer unit.

11. The process according to claims 8 and 9, wherein the second water soluble resin comprises a blend of a polyvinyl alcohol homopolymer and a polyvinyl alcohol copolymer comprising an anionic monomer unit, preferably wherein the blend comprises from 0% to 70% of the polyvinyl alcohol copolymer comprising an anionic monomer unit and from 30% to 100% of the polyvinyl alcohol homopolymer, based on the total weight of the second water soluble resin in the second film, more preferably wherein the blend comprises from 10% to 70%, even more preferably from 15% to 65%, even more preferably from 20% to 50%, most preferably from 30% to 40% of the polyvinyl alcohol copolymer comprising an anionic monomer unit and from about 30% to about 90%, or from about 35 wt% to about 85 wt%, or from about 50% to about 80%, or from about 60% to about 70% by weight of the second water soluble resin of the polyvinyl alcohol homopolymer, based on the total weight of the second water soluble resin in the second film, preferably wherein the polymeric blend of the second water soluble resin is different from the polymeric resin of the first water soluble resin,

12. The process according to claims 8 to 10, wherein the second water soluble resin comprises 100% by weight of the second water soluble resin of a polyvinyl alcohol homopolymer.

13. The process according to claims 9 to 12, wherein the anionic monomer unit is selected from the group consisting of anionic monomers derived from vinyl acetate, alkyl acrylates, monoalkyl maleate, dialkyl maleate, monomethyl maleate, dimethyl maleate, maleic anhydride, monoalkyl fumarate, dialkyl fumarate, monomethyl fumarate, dimethyl fumarate, fumaric anhydride, monomethyl itaconate, dimethyl itaconate, itaconic anhydride, monoalkyl citraconate, dialkyl citraconate, citraconic anhydride, monoalkyl mesaconate, dialkyl mesaconate, mesaconic anhydride, monoalkyl glutaconate, dialkyl glutaconate, glutaconic anhydride, vinyl sulfonate, alkyl sulfonate, ethylene sulfonate, 2-acrylamido-1-methyl propane sulfonate, 2-acrylamide-2-methylpropane sulfonate, 2-methylacrylamido-2-methylpropane sulfonate, 2-sulfoethyl acrylate, alkali metal salts thereof, esters thereof, and combinations thereof, preferably, wherein the anionic monomer unit is selected from the group consisting of anionic monomers derived from monoalkyl maleate, dialkyl maleate, maleic anhydride, alkali metal salts thereof, esters thereof, and combinations thereof, more preferably wherein the anionic monomer unit is selected from the group consisting of anionic monomers derived from monomethyl maleate, dimethyl maleate, maleic anyhydride, alkali metal salts thereof, esters thereof, and combinations thereof.

14. The process according to any preceding claims wherein the first water-soluble film, and the second water-soluble film independently have a thickness before incorporation into the unit dose article of between 40 microns and 100 microns, preferably between 60 microns and 90 microns, more preferably between 70 microns and 80 microns, preferably wherein the difference in thickness before incorporation into the unit dose article between the first water-soluble film and the second water-soluble film is less than 50%, preferably less than 30%, more preferably less than 20%, even more preferably less than 10%, or 0%.

15. The process according to any preceding claims wherein the first water-soluble film comprises a first plasticizer system selected from polyols, sugar alcohols, or a mixture thereof, preferably wherein the polyols are selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof; and preferably wherein the sugar alcohols are selected from the group consisting of isomalt, maltitol, sorbitol, xylitol, erythritol, adonitol, dulcitol, pentaerythritol and mannitol, or a mixture thereof; most preferably wherein the plasticizer is selected from the group consisting of glycerin, sorbitol, triethyleneglycol, 1,2-propylene glycol, dipropylene glycol, 2-methyl-1,3-propanediol, trimethylolpropane, polyethylene glycols up to 400 MW or a combination thereof; and wherein the second water-soluble film comprises a second plasticizer system selected from polyols, sugar alcohols, or a mixture thereof, preferably wherein the polyols are selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof; and preferably wherein the sugar alcohols are selected from the group consisting of isomalt, maltitol, sorbitol, xylitol, erythritol, adonitol, dulcitol, pentaerythritol and mannitol, or a mixture thereof; most preferably wherein the plasticizer is selected from the group consisting of glycerin, sorbitol, triethyleneglycol, 1,2-propylene glycol, dipropylene glycol, 2-methyl-1,3-propanediol, trimethylolpropane, polyethylene glycols up to 400 MW or a combination thereof; and wherein the first plasticizer system is different to the second plasticizer system.

## Patentansprüche

1. Verfahren zum Fertigen eines wasserlöslichen Einheitsgebrauchsmengenartikels mit verbesserter Verschlussfestigkeit, wobei der wasserlösliche Einheitsgebrauchsmengenartikel eine Waschmittelzusammensetzung umfasst, das die Schritte umfasst:
a. Thermoformen einer ersten wasserlöslichen Folie in eine Form, um einen offenen Hohlraum zu erstellen;
b. Füllen des offenen Hohlraums mit der Waschmittelzusammensetzung;
c. Verschweißen des offenen Hohlraums durch Positionieren einer zweiten wasserlöslichen Folie in Kontakt mit der ersten wasserlöslichen Folie derart, dass die zweite wasserlösliche Folie den offenen Hohlraum schließt;
d. Verschweißen der ersten Folie und der zweiten Folie miteinander über Lösungsmittelverschweißung, wobei das Verschweißungslösungsmittel Wasser umfasst;
wobei die erste wasserlösliche Folie eine erste Wasserkapazität aufweist, und wobei die zweite wasserlösliche Folie eine zweite Wasserkapazität aufweist, und wobei sich die erste Wasserkapazität von der zweiten Wasserkapazität unterscheidet, und wobei "Wasserkapazität" die Kapazität der Folie bedeutet, Wasser über einen festen Zeitabschnitt bei einer besonderen relativen Feuchtigkeit und Temperatur zu absorbieren, gemessen als Massenzunahme der getesteten Folie; und
wobei der Prozentsatzunterschied der Wasserkapazität zwischen der Wasserkapazität der ersten wasserlöslichen Folie und der zweiten wasserlöslichen Folie zwischen 0,01 % und 5 % liegt; und
wobei das Verschweißungslösungsmittel vor Schritt c aufgebracht wird und das Verschweißungslösungsmittel auf die Folie, die die geringste Wasserkapazität aufweist, aufgebracht wird;
Verfahren nach einem der vorstehenden Ansprüche, wobei die erste wasserlösliche Folie ein erstes wasserlösliches Harz umfasst und die zweite wasserlösliche Folie ein zweites wasserlösliches Harz umfasst, vorzugsweise wobei das erste wasserlösliche Harz wenigstens ein Polyvinylalkoholhomopolymer oder wenigstens ein Polyvinylalkoholcopolymer oder eine Mischung davon umfasst und das zweite wasserlösliche Harz wenigstens ein Polyvinylalkoholhomopolymer oder wenigstens ein Polyvinylalkoholcopolymer oder eine Mischung davon umfasst.

2. Verfahren nach Anspruch 1, wobei die Wasserkapazität der ersten wasserlöslichen Folie größer als die Wasserkapazität der zweiten wasserlöslichen Folie ist.

3. Verfahren nach Anspruch 2, wobei die zweite wasserlösliche Folie eine Wasserkapazität von 1 % bis 10 %, vorzugsweise von 2 % bis 8 %, mehr bevorzugt von 3 % bis 6 % aufweist.

4. Verfahren nach den Ansprüchen 2 oder 3, wobei die erste wasserlösliche Folie eine Wasserkapazität von 1,5 % bis 12 %, vorzugsweise von 2,5 % bis 10 %, mehr bevorzugt von 3,5 % bis 8 % aufweist.

5. Verfahren nach einem der vorstehenden Ansprüche, wobei der Prozentsatzunterschied in Wasserkapazität von 0,03 % bis 3,5 %, am meisten bevorzugt von 0,05 % bis 2 % beträgt.

6. Verfahren nach einem der vorstehenden Ansprüche, wobei sich die erste wasserlösliche Folie und die zweite wasserlösliche Folie chemisch voneinander unterscheiden.

7. Verfahren nach einem der vorstehenden Ansprüche, wobei das Verschweißungslösungsmittel zu 95 Gew.-% oder mehr des Verschweißungslösungsmittels an Wasser, vorzugsweise zu 100 Gew.-% des Verschweißungslösungsmittels an Wasser umfasst.

8. Verfahren nach einem der vorstehenden Ansprüche, wobei sich das Polymersystem des ersten wasserlöslichen Harzes von dem Polymersystem des zweiten wasserlöslichen Harzes unterscheidet.

9. Verfahren nach Anspruch 8, wobei das erste wasserlösliche Harz eine Mischung aus einem Polyvinylalkoholhomopolymer und einem Polyvinylalkoholcopolymer umfasst, umfassend eine anionische Monomereinheit, vorzugsweise wobei die Mischung von zu 0 % bis 70 % das Polyvinylalkoholcopolymer, umfassend eine anionische Monomereinheit und von zu 30 % bis etwa 100 % das Polyvinylalkoholhomopolymer, bezogen auf das Gesamtgewicht des ersten wasserlöslichen Harzes in der ersten Folie, umfasst, mehr bevorzugt wobei die Mischung von zu 10 % bis 70 %, noch mehr bevorzugt von zu 15 % bis weniger als 65 %, noch mehr bevorzugt von zu 20 % bis 50 %, am meisten bevorzugt von zu 30 % bis 40 % das Polyvinylalkoholcopolymer, umfassend eine anionische Monomereinheit und von zu etwa 30 Gew.-% bis etwa 90 Gew.-% oder mehr als zu 35 Gew.-% bis etwa 85 Gew.-% oder von etwa zu 50 Gew.-% bis etwa 80 Gew.-% oder von etwa zu 60 Gew.-% bis etwa 70 Gew.-% das erste wasserlösliche Harz des Polyvinylalkoholhomopolymers, bezogen auf das Gesamtgewicht des ersten wasserlöslichen Harzes in der ersten Folie, umfasst.

10. Verfahren nach Anspruch 8, wobei das erste wasserlösliche Harz zu 100 Gew.-% des ersten wasserlöslichen Harzes ein Polyvinylalkoholcopolymer, umfassend eine anionische Monomereinheit, umfasst.

11. Verfahren nach den Ansprüchen 8 und 9, wobei das zweite wasserlösliche Harz eine Mischung aus einem Polyvinylalkoholhomopolymer und einem Polyvinylalkoholcopolymer, umfassend eine anionische Monomereinheit, umfasst, vorzugsweise wobei die Mischung von zu 0 % bis 70 % das Polyvinylalkoholcopolymer, umfassend eine anionische Monomereinheit und von zu 30 % bis 100 % das Polyvinylalkoholhomopolymer, bezogen auf das Gesamtgewicht des zweiten wasserlöslichen Harzes in der zweiten Folie, umfasst, mehr bevorzugt wobei die Mischung von zu 10 % bis 70 %, noch mehr bevorzugt von zu 15 % bis 65 %, noch mehr bevorzugt von zu 20 % bis 50 %, am meisten bevorzugt von zu 30 % bis 40 % das Polyvinylalkoholcopolymer, umfassend eine anionische Monomereinheit, oder von zu etwa 30 Gew.-% bis etwa 90 Gew.-% oder von zu etwa 35 Gew.-% bis etwa 85 Gew.-% oder von zu etwa 50 Gew.-% bis etwa 80 Gew.-% oder von zu etwa 60 Gew.-% bis etwa 70 Gew.-% das zweite wasserlösliche Harz des Polyvinylalkoholhomopolymers, bezogen auf das Gesamtgewicht des zweiten wasserlöslichen Harzes in der zweiten Folie, umfasst, vorzugsweise wobei sich die Polymermischung des zweiten wasserlöslichen Harzes von dem Polymerharz des ersten wasserlöslichen Harzes unterscheidet,

12. Verfahren nach den Ansprüchen 8 bis 10, wobei das zweite wasserlösliche Harz zu 100 Gew.-% des zweiten wasserlöslichen Harzes ein Polyvinylalkoholhomopolymer umfasst.

13. Verfahren nach den Ansprüchen 9 bis 12, wobei die anionische Monomereinheit ausgewählt ist aus der Gruppe bestehend aus anionischen Monomeren, abgeleitet aus Vinylacetat, Alkylacrylaten, Monoalkylmaleat, Dialkylmaleat, Monomethylmaleat, Dimethylmaleat, Maleinsäureanhydrid, Monoalkylfumarat, Dialkylfumarat, Monomethylfumarat, Dimethylfumarat, Fumarsäureanhydrid, Monomethylitaconat, Dimethylitaconat, Itaconsäureanhydrid, Monoalkylcitraconat, Dialkylcitraconat, Citraconsäureanhydrid, Monoalkylmesaconat, Dialkylmesaconat, Mesaconsäureanhydrid, Monoalkylglutaconat, Dialkylglutaconat, Glutaconsäureanhydrid, Vinylsulfonat, Alkylsulfonat, Ethylensulfonat, 2-Acrylamido-1-methylpropansulfonat, 2-Acrylamid-2-methylpropansulfonat, 2-Methylacrylamido-2-methylpropansulfonat, 2-Sulfoethylacrylat, Alkalimetallsalzen davon, Estern davon und Kombinationen davon, vorzugsweise wobei die anionische Monomereinheit ausgewählt ist aus der Gruppe bestehend aus anionischen Monomeren, abgeleitet aus Monoalkylmaleat, Dialkylmaleat, Maleinsäureanhydrid, Alkalimetallsalzen davon, Estern davon und Kombinationen davon, mehr bevorzugt wobei die anionische Monomereinheit ausgewählt ist aus der Gruppe bestehend aus anionischen Monomeren, abgeleitet aus Monomethylmaleat, Dimethylmaleat, Maleinsäureanhydrid, Alkalimetallsalzen davon, Estern davon und Kombinationen davon.

14. Verfahren nach einem der vorstehenden Ansprüche, wobei die erste wasserlösliche Folie und die zweite wasserlösliche Folie vor Beimischung in den Einheitsgebrauchsmengenartikel unabhängig eine Dicke zwischen 40 Mikrometer und 100 Mikrometer, vorzugsweise zwischen 60 Mikrometer und 90 Mikrometer, mehr bevorzugt zwischen 70 Mikrometer und 80 Mikrometer aufweisen, vorzugsweise wobei der Dickenunterschied vor Beimischung in den Einheitsgebrauchsmengenartikel zwischen der ersten wasserlöslichen Folie und der zweiten wasserlöslichen Folie weniger als 50 %, vorzugsweise weniger als 30 %, mehr bevorzugt weniger als 20 %, noch mehr bevorzugt weniger als 10 % oder 0 % beträgt.

15. Verfahren nach einem der vorstehenden Ansprüche, wobei die erste wasserlösliche Folie ein erstes Weichmachersystem umfasst, das ausgewählt ist aus Polyolen, Zuckeralkoholen oder einer Mischung davon, vorzugsweise wobei die Polyole ausgewählt sind aus der Gruppe bestehend aus Glycerin, Diglycerin, Ethylenglycol, Diethylenglycol, Triethylenglycol, Tetraethylenglycol, Polyethylenglycolen bis zu 400 MW, Neopentylglycol, 1,2-Propylenglycol, 1,3-Propandiol, Dipropylenglycol, Polypropylenglycol, 2-Methyl-1,3-propandiol, Trimethylolpropan und Polyetherpolyolen oder einer Mischung davon; und vorzugsweise wobei die Zuckeralkohole ausgewählt sind aus der Gruppe bestehend aus Isomalt, Maltit, Sorbit, Xylit, Erythrit, Adonit, Dulcit, Pentaerythrit und Mannit oder einer Mischung davon; am meisten bevorzugt wobei der Weichmacher ausgewählt ist aus der Gruppe bestehend aus Glycerin, Sorbit, Triethylenglycol, 1,2-Propylenglycol, Dipropylenglycol, 2-Methyl-1,3-propandiol, Trimethylolpropan, Polyethylenglycolen bis zu 400 MW oder einer Kombination davon; und wobei die zweite wasserlösliche Folie ein zweites Weichmachersystem umfasst, das ausgewählt ist aus Polyolen, Zuckeralkoholen oder einer Mischung davon, vorzugsweise wobei die Polyole ausgewählt sind aus der Gruppe bestehend aus Glycerin, Diglycerin, Ethylenglycol, Diethylenglycol, Triethylenglycol, Tetraethylenglycol, Polyethylenglycolen bis zu 400 MW, Neopentylglycol, 1,2-Propylenglycol, 1,3-Propandiol, Dipropylenglycol, Polypropylenglycol, 2-Methyl-1,3-propandiol, Trimethylolpropan und Polyetherpolyolen, oder einer Mischung davon; und vorzugsweise wobei die Zuckeralkohole ausgewählt sind aus der Gruppe bestehend aus Isomalt, Maltit, Sorbit, Xylit, Erythrit, Adonit, Dulcit, Pentaerythrit und Mannit oder einer Mischung davon; am meisten bevorzugt wobei der Weichmacher ausgewählt ist aus der Gruppe bestehend aus Glycerin, Sorbit, Triethylenglycol, 1,2-Propylenglycol, Dipropylenglycol, 2-Methyl-1,3-propandiol, Trimethylolpropan, Polyethylenglycolen bis zu 400 MW oder einer Kombination davon; und wobei sich das erste Weichmachersystem von dem zweiten Weichmachersystem unterscheidet.

## Revendications

1. Procédé de fabrication d'un article hydrosoluble en dose unitaire ayant une résistance de scellement améliorée, dans lequel l'article hydrosoluble en dose unitaire comprend une composition détergente, comprenant les étapes consistant à
a. thermoformer un premier film hydrosoluble dans un moule afin de créer une cavité ouverte ;
b. remplir la cavité ouverte avec la composition détergente ;
c. fermer la cavité ouverte en positionnant un second film hydrosoluble en contact avec le premier film hydrosoluble de telle sorte que le second film hydrosoluble ferme la cavité ouverte ;
d. sceller le premier film et le second film ensemble par l'intermédiaire d'un scellage par solvant, dans lequel le solvant de scellement comprend de l'eau ;
dans lequel le premier film hydrosoluble a une première capacité en eau, et dans lequel le second film hydrosoluble a une seconde capacité en eau, et dans lequel la première capacité en eau est différente de la seconde capacité en eau, et dans lequel « capacité en eau » signifie la capacité du film à absorber de l'eau sur une période fixée à une humidité relative et à une température particulières, mesurée en tant qu'augmentation de masse du film testé ; et
dans lequel la différence en pourcentage de capacité en eau entre la capacité en eau du premier film hydrosoluble et du second film hydrosoluble est comprise entre 0,01 % et 5 % ; et
dans lequel le solvant de scellement est appliqué avant l'étape c et le solvant de scellement est appliqué au film ayant la capacité en eau la plus faible ;
dans lequel le premier film hydrosoluble comprend une première résine hydrosoluble et le second film hydrosoluble comprend une seconde résine hydrosoluble, dans lequel la première résine hydrosoluble comprend au moins un homopolymère d'alcool polyvinylique ou au moins un copolymère d'alcool polyvinylique ou un mélange de ceux-ci et la seconde résine hydrosoluble comprend au moins un homopolymère d'alcool polyvinylique ou au moins un copolymère d'alcool polyvinylique ou un mélange de ceux-ci.

2. Procédé selon la revendication 1, dans lequel la capacité en eau du premier film hydrosoluble est supérieure à la capacité en eau du second film hydrosoluble.

3. Procédé selon la revendication 2, dans lequel le second film hydrosoluble a une capacité en eau allant de 1 % à 10 %, de préférence de 2 % à 8 %, plus préférablement de 3 % à 6 %.

4. Procédé selon les revendications 2 ou 3, dans lequel le premier film hydrosoluble a une capacité en eau allant de 1,5 % à 12 %, de préférence de 2,5 % à 10 %, plus préférablement de 3,5 % à 8 %.

5. Procédé selon l'une quelconque des revendications précédentes, dans lequel la différence en pourcentage de capacité en eau va de 0,03 % à 3,5 %, le plus préférablement de 0,05 % à 2 %.

6. Procédé selon l'une quelconque des revendications précédentes, dans lequel le premier film hydrosoluble et le second film hydrosoluble sont chimiquement différents l'un de l'autre.

7. Procédé selon l'une quelconque des revendications précédentes, dans lequel le solvant de scellement comprend 95 % ou plus, en poids du solvant de scellement, d'eau, de préférence 100 % en poids du solvant de scellement d'eau.

8. Procédé selon l'une quelconque des revendications précédentes, dans lequel le système polymère de la première résine hydrosoluble est différent du système polymère de la seconde résine hydrosoluble.

9. Procédé selon la revendication 8, dans lequel la première résine hydrosoluble comprend un mélange d'un homopolymère d'alcool polyvinylique et d'un copolymère d'alcool polyvinylique comprenant un motif monomère anionique, de préférence dans lequel le mélange comprend de 0 % à 70 % de copolymère d'alcool polyvinylique comprenant un motif monomère anionique et de 30 % à environ 100 % de l'homopolymère d'alcool polyvinylique, sur la base du poids total de la première résine hydrosoluble dans le premier film, plus préférablement dans lequel le mélange comprend de 10 % à 70 %, encore plus préférablement de 15 % à moins de 65 %, encore plus préférablement de 20 % à 50 %, le plus préférablement de 30 % à 40 % du copolymère d'alcool polyvinylique comprenant un motif monomère anionique, et de 30 % à 90 %, ou de plus de 35 % à 85 %, ou de 50 % à 80 %, ou de 60 % en poids à 70 % en poids de la première résine hydrosoluble de l'homopolymère d'alcool polyvinylique, sur la base du poids total de la première résine hydrosoluble dans le premier film.

10. Procédé selon la revendication 8, dans lequel la première résine hydrosoluble comprend 100 % en poids de la première résine hydrosoluble d'un copolymère d'alcool polyvinylique comprenant un motif monomère anionique.

11. Procédé selon les revendications 8 et 9, dans lequel la seconde résine hydrosoluble comprend un mélange d'un homopolymère d'alcool polyvinylique et d'un copolymère d'alcool polyvinylique comprenant un motif monomère anionique, de préférence dans lequel le mélange comprend de 0 % à 70 % du copolymère d'alcool polyvinylique comprenant un motif monomère anionique et de 30 % à 100 % de l'homopolymère d'alcool polyvinylique, sur la base du poids total de la seconde résine hydrosoluble dans le second film, plus préférablement dans lequel le mélange comprend de 10 % à 70 %, encore plus préférablement de 15 % à 65 %, encore plus préférablement de 20 % à 50 %, le plus préférablement de 30 % à 40 % du copolymère d'alcool polyvinylique comprenant un motif monomère anionique et d'environ 30 % à environ 90 %, ou d'environ 35 % en poids à environ 85 % en poids, ou d'environ 50 % à environ 80 %, ou d'environ 60 % à environ 70 % en poids de la seconde résine hydrosoluble de l'homopolymère d'alcool polyvinylique, sur la base du poids total de la seconde résine hydrosoluble dans le second film, de préférence dans lequel le mélange polymère de la seconde résine hydrosoluble est différent de la résine polymère de la première résine hydrosoluble,

12. Procédé selon les revendications 8 à 10, dans lequel la seconde résine hydrosoluble comprend 100 % en poids de la seconde résine hydrosoluble d'un homopolymère d'alcool polyvinylique.

13. Procédé selon les revendications 9 à 12, dans lequel le motif monomère anionique est choisi dans le groupe constitué de monomères anioniques dérivés d'acétate de vinyle, acrylates d'alkyle, maléate de monoalkyle, maléate de dialkyle, maléate de monométhyle, maléate de diméthyle, anhydride maléique, fumarate de monoalkyle, fumarate de dialkyle, fumarate de monométhyle, fumarate de diméthyle, anhydride fumarique, itaconate de monométhyle, itaconate de diméthyle, anhydride itaconique, citraconate de monoalkyle, citraconate de dialkyle, anhydride citraconique, mésaconate de monoalkyle, mésaconate de dialkyle, anhydride mésaconique, glutaconate de monoalkyle, glutaconate de dialkyle, anhydride glutaconique, sulfonate de vinyle, sulfonate d'alkyle, sulfonate d'éthylène, 2-acrylamido-1-méthylpropane sulfonate, 2-acrylamide-2-méthylpropane sulfonate, 2-méthylacrylamido-2-méthylpropane sulfonate, acrylate de 2-sulfoéthyle, sels de métal alcalin de ceux-ci, esters de ceux-ci, et combinaisons de ceux-ci, de préférence, dans lequel le motif monomère anionique est choisi dans le groupe constitué de monomères anioniques dérivés de maléate de monoalkyle, maléate de dialkyle, anhydride maléique, sels de métal alcalin de ceux-ci, esters de ceux-ci, et combinaisons de ceux-ci, plus préférablement dans lequel le motif monomère anionique est choisi dans le groupe constitué de monomères anioniques dérivés de maléate de monométhyle, maléate de diméthyle, anhydride maléique, sels de métal alcalin de ceux-ci, esters de ceux-ci, et combinaisons de ceux-ci.

14. Procédé selon l'une quelconque des revendications précédentes, dans lequel le premier film hydrosoluble, et le second film hydrosoluble ont indépendamment une épaisseur avant incorporation dans l'article en dose unitaire comprise entre 40 micromètres et 100 micromètres, de préférence entre 60 micromètres et 90 micromètres, plus préférablement entre 70 micromètres et 80 micromètres, de préférence dans lequel la différence d'épaisseur avant incorporation dans l'article en dose unitaire entre le premier film hydrosoluble et le second film hydrosoluble est inférieure à 50 %, de préférence inférieure à 30 %, plus préférablement inférieure à 20 %, encore plus préférablement inférieure à 10 %, ou de 0 %.

15. Procédé selon l'une quelconque des revendications précédentes, dans lequel le premier film hydrosoluble comprend un premier système plastifiant choisi parmi polyols, alcools de sucre, ou un mélange de ceux-ci, de préférence dans lequel les polyols sont choisis dans le groupe constitué de glycérol, diglycérine, éthylène glycol, diéthylène glycol, triéthylèneglycol, tétraéthylène glycol, polyéthylène glycols jusqu'à 400 MW, néopentylglycol, 1,2-propylène glycol, 1,3-propanediol, dipropylène glycol, polypropylène glycol, 2-méthyl-1,3-propanediol, triméthylolpropane et polyols de polyéther, ou un mélange de ceux-ci ; et de préférence dans lequel les alcools de sucre sont choisis dans le groupe constitué d'isomalt, maltitol, sorbitol, xylitol, érythritol, adonitol, dulcitol, pentaérythritol et mannitol, ou un mélange de ceux-ci ; le plus préférablement dans lequel le plastifiant est choisi dans le groupe constitué de glycérine, sorbitol, triéthylèneglycol, 1,2-propylène glycol, dipropylène glycol, 2-méthyl-1,3-propanediol, triméthylolpropane, polyéthylène glycols jusqu'à 400 MW, ou une combinaison de ceux-ci ; et dans lequel le second film hydrosoluble comprend un second système plastifiant choisi parmi polyols, alcools de sucre, ou un mélange de ceux-ci, de préférence dans lequel les polyols sont choisis dans le groupe constitué de glycérol, diglycérine, éthylène glycol, diéthylène glycol, triéthylèneglycol, tétraéthylène glycol, polyéthylène glycols jusqu'à 400 MW, néopentylglycol, 1,2-propylène glycol, 1,3-propanediol, dipropylène glycol, polypropylène glycol, 2-méthyl-1,3-propanediol, triméthylolpropane et polyols de polyéther, ou un mélange de ceux-ci ; et de préférence dans lequel les alcools de sucre sont choisis dans le groupe constitué d'isomalt, maltitol, sorbitol, xylitol, érythritol, adonitol, dulcitol, pentaérythritol et mannitol, ou un mélange de ceux-ci ; le plus préférablement dans lequel le plastifiant est choisi dans le groupe constitué de glycérine, sorbitol, triéthylèneglycol, 1,2-propylène glycol, dipropylène glycol, 2-méthyl-1,3-propanediol, triméthylolpropane, polyéthylène glycols jusqu'à 400 MW, ou une combinaison de ceux-ci ; et dans lequel le premier système plastifiant est différent du second système plastifiant.
